(19) Europäisches Patentamt
European Patent Office
Office européen des brevets

(11) **EP 3 115 293 A1**

(12) **DEMANDE DE BREVET EUROPEEN**

(43) Date de publication:
**11.01.2017 Bulletin 2017/02**

(51) Int Cl.:
**B64C 1/00** *(2006.01)*      **B64C 23/08** *(2006.01)*

(21) Numéro de dépôt: **15306117.1**

(22) Date de dépôt: **08.07.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(71) Demandeur: **Airbus Group SAS**
**31700 Blagnac (FR)**

(72) Inventeur: **Geneste, Jean-François**
**31200 Toulouse (FR)**

(74) Mandataire: **Ipside**
**7-9 Allées Haussmann**
**33300 Bordeaux Cedex (FR)**

(54) **FUSELAGE SUPER CRITIQUE ET AVION COMPORTANT UN TEL FUSELAGE**

(57) Un fuselage (10) d'avion, générateur de portance aérodynamique lorsque qu'il est soumis à un écoulement aérodynamique, comporte un dispositif de modification de l'écoulement local (30) sur un extrados (31) et ou sur un intrados (32) dudit fuselage par un défilement d'au moins une surface défilante lorsque ledit fuselage est soumis à l'écoulement aérodynamique, couvrant tout ou partie d'une surface dudit extrados et ou dudit intrados.

Il est ainsi obtenu de contrôler la circulation aérodynamique en vol autour du fuselage.

Fig. 3
Section AA

EP 3 115 293 A1

**Description**

DOMAINE DE L'INVENTION

L'invention appartient au domaine des avions et de l'optimisation de leurs performances aérodynamiques.

Plus particulièrement l'invention concerne un fuselage d'avion conçu pour optimiser l'écoulement aérodynamique en vol autour du fuselage et concerne un avion pourvu d'un tel fuselage super critique.

ÉTAT DE L'ART

Les caractéristiques aérodynamiques sont essentielles pour les performances d'un aéronef destiné à se déplacer en mouvement dans une masse d'air.

La résultante des forces aérodynamiques dans le plan vertical de symétrie d'ensemble de l'aéronef, plan dans lequel se situe le vecteur de la vitesse par rapport à l'air dans le cas du vol symétrique, est généralement décomposée en deux forces principales : la traînée D et la portance L.

La portance L s'oppose au poids de l'aéronef, la traînée D s'oppose à l'avancement de l'aéronef dans la masse d'air.

A l'équilibre, en régime de vol horizontal à vitesse constante d'un avion, la portance est donc égale au poids et la traînée est égale à la poussée produite par les moteurs de propulsion.

En outre il peut exister des forces aérodynamiques latérales associées au dérapage et des couples aérodynamiques qui ont une importance sur la stabilité du vol de l'aéronef et pour son équilibrage.

Il est avantageux de minimiser la traînée D pour la portance L nécessaire, et ainsi de diminuer la résistance à l'avancement dans des conditions données de vol de l'avion.

Le rapport L/D, bien connu des aérodynamiciens, détermine la finesse qui en un point de vol donné est une caractéristique aérodynamique directement liée au rendement de l'avion.

La recherche de l'amélioration de ce rapport L/D est donc une constante dans l'aérodynamique des avions.

Les voies de progrès dans ce domaine depuis les origines de l'aérodynamique ont été la recherche d'une diminution de la traînée du fuselage par des formes toujours plus optimisées qui ont permis de réduire l'impact du fuselage sur la traînée et de la diminution de la traînée des ailes induite par la portance.

Les théories connues montrent que la traînée induite par la portance diminue avec l'allongement géométrique de l'aile, rapport du carré de l'envergure de l'aile à sa surface, et est fonction de la répartition de la portance en envergure, une répartition elliptique étant un optimum théorique.

Il a ainsi été réalisé des avions avec des ailes de grand allongement géométrique, tel que l'avion Hurel-Dubois HD34 avec un allongement de 20, et de manière plus fréquente les planeurs de compétition dont les allongements dépassent parfois la valeur de 50.

La recherche d'allongements extrêmes s'avère cependant trouver des limites pratiques en raison de la résistance structurale des ailes. Pour une surface donnée de l'aile, augmenter l'allongement conduit nécessairement à diminuer les cordes aérodynamiques de cette aile. Comme en pratique les épaisseurs relatives des profils aérodynamiques sont limités, l'épaisseur d'un profil d'aile conventionnel est généralement inférieur à 20 % de la corde sauf à augmenter significativement la traînée de forme et les effets de la compressibilité, la diminution des cordes conduit à des épaisseurs absolues de profil également diminuées et par conséquence il devient difficile de construire une aile suffisamment solide pour résister aux efforts de flexion que subit une aile de grand allongement.

En pratique, pour les avions civils de transport les allongements des ailes sont de manière courante compris entre 7 et 10.

Si l'aile est historiquement destinée à réaliser la portance nécessaire au vol, le fuselage est généralement considéré comme un inconvénient aérodynamique générateur de traînée, traînée de forme et traînée de frottement principalement, qui est subie pour répondre aux exigences des charges utiles.

La nécessité pour les avions civils de transporter des passagers conduit à des fuselages généralement cylindriques, souvent de sections circulaires ou multi-lobes en raison de la pressurisation des cabines pour les vols en altitude.

De tels fuselages ne génèrent pas de portance significative tant en raison de leurs formes de sections circulaires, ou voisines, que du fait qu'ils sont le plus souvent maintenus en vol à une incidence proche de zéro.

Toutefois, en dehors de la recherche d'un état de surface sans aspérités et de formes optimisées, peu de solutions ont été recherchées pour apporter au fuselage un rôle actif dans la création de portance et dans l'amélioration de la finesse.

Il a également été imaginé de réaliser des avions sans fuselage en agençant dans une aile suffisamment épaisse les volumes nécessaires pour la charge utile.

Ce concept dit d'aile volante, dont un exemple est illustré dans la demande de brevet publiée sous le numéro FR 2 909 358, s'avère potentiellement adapté à des aéronefs de grandes capacités permettant de combiner une aile de grande surface et une épaisseur suffisante sans être trop pénalisante sur le plan aérodynamique.

Il a également été considéré de réaliser, par exemple dans la demande de brevet internationale WO 97/43176, des avions avec des ailes et un fuselage en forme de profil d'aile pour que le fuselage participe à la portance de l'avion. Dans de telles configurations, la portance apportée par le fuselage est faible et les contraintes sont importantes sur la forme du fuselage qui est en pratique peu adaptée aux charges utiles, peu adaptée aux contraintes de pressurisation et n'apporte qu'un faible bénéfice aérodynamique du fait de la très faible envergure, et donc du faible allongement aérodynamique, du fuselage.

Il a également été étudié, en particulier pour la réalisation de corps de rentrée atmosphérique planant, des fuselages portant dépourvus d'aile. Un exemple d'un tel fuselage portant est illustré par le prototype de planeur M2F1 développé par la NASA.

De forme Delta en vue de dessus, le fuselage de cet appareil, en l'occurrence un planeur pour le M2F1, présente une forme des sections, perpendiculaires à l'axe longitudinal, arrondie dans la partie inférieure et aplatie dans la partie supérieure, donnant au fuselage une forme d'ensemble d'un demi tronc de cône de section sensiblement circulaire coupé par un plan axial horizontal de l'avion.

Toutefois un tel appareil, démonstrateur d'un fuselage portant n'est pas adapté à une utilisation industrielle du transport aérien en raison d'une finesse L/D en vol de l'ordre de 3 lorsque les avions de transport on en général des finesses comprises entre 15 et 20.

EXPOSÉ DE L'INVENTION

La présente invention apporte une amélioration aux performances aérodynamiques des avions par rapport à celles des avions d'architectures conventionnelles.

Suivant l'invention, un fuselage d'avion, générateur de portance aérodynamique lorsque qu'il est soumis à un écoulement aérodynamique, comporte un dispositif de modification de l'écoulement local sur un extrados et ou sur un intrados du fuselage par un défilement d'au moins une surface défilante lorsque ledit fuselage est soumis à l'écoulement aérodynamique, couvrant tout ou partie d'une surface de l'extrados et ou de l'intrados.

Ainsi il est obtenu de modifier pendant le vol de l'avion la circulation aérodynamique résultante autour du fuselage et d'agir sur la portance aérodynamique et ou sur la traînée aérodynamique du fuselage.

Dans une forme de réalisation, au moins une surface défilante est agencée sur le fuselage avec une direction de défilement de la surface défilante fixe dans un repère fuselage et orientée dans le repère fuselage pour être soumise, à une composante de la vitesse de l'écoulement aérodynamique égale ou supérieure à 50 % du module en valeur absolue de la vitesse de l'écoulement aérodynamique à l'emplacement de ladite surface défilante.

Un tel agencement permet de maintenir un effet significatif des surfaces défilantes, le cas échéant en prenant en compte des différence de direction entre l'écoulement infini amont et l'écoulement local en des point particuliers du fuselage.

En particulier, une surface défilante est agencée sur le fuselage pour qu'un angle entre la direction d'un écoulement local, déterminée pour des conditions moyennes de vol en croisière, et la direction du défilement de la dite surface défilante soit compris entre ± 45°, modulo 180°.

Dans une forme de réalisation, au moins une surface défilante comporte un cylindre tournant d'extrados agencé dans une structure du fuselage et ledit cylindre tournant d'extrados dépasse à l'extérieur dudit fuselage par rapport à une ligne naturelle de l'extrados d'une hauteur δ comprise entre 5 % et 50 % d'un diamètre D dudit cylindre tournant d'extrados.

Dans une forme de réalisation, au moins une surface défilante comporte un cylindre tournant d'intrados agencé dans une structure du fuselage et ledit cylindre tournant d'intrados dépasse à l'extérieur dudit fuselage par rapport à une ligne naturelle de l'intrados d'une hauteur δ comprise entre 5 % et 50 % d'un diamètre D dudit cylindre tournant d'intrados.

Il est ainsi obtenu d'adapter la surface effective du cylindre soumise à l'écoulement aérodynamique en prenant en considération la hauteur de dépassement des cylindres.

Dans une forme de réalisation, un cylindre tournant est entraîné en rotation à vitesse contrôlée autour d'un axe de révolution du cylindre tournant considéré par un moteur du dispositif de modification de l'écoulement local.

La vitesse de rotation du cylindre tournant et donc l'intensité avec laquelle le cylindre agit sur la circulation aérodynamique autour du fuselage est ainsi contrôlée et adaptée par le dispositif en fonctions des besoins propres à la phase de vol de l'avion.

Dans un mode de réalisation alternatif et combinable avec le mode de réalisation à rouleaux tournants, au moins une surface défilante comporte un revêtement défilant constituant tout ou partie d'une surface de l'extrados et ou de l'intrados du fuselage, soumise à l'écoulement aérodynamique.

Dans une forme de réalisation, le revêtement défilant est un ruban refermé sur lui-même pour constituer une boucle et maintenu en tension entre au moins deux rouleaux guides.

Dans une forme de réalisation le fuselage est un corps porteur ayant une forme d'ensemble de demicône tronqué dont des sections perpendiculaires à un axe longitudinal du fuselage présentent une forme arrondie dans une partie inférieure formant un intrados du fuselage et aplatie dans une partie supérieure formant un extrados du fuselage, une partie effilée du demi-cône étant située du côté d'une extrémité avant de l'avion et une partie tronquée étant située du côté d'une extrémité arrière de l'avion.

La mise en oeuvre de l'invention avec une telle forme de fuselage, porteur du fait de ses formes naturelle, permet d'agir sur la circulation aérodynamique autour du fuselage avec des effets augmentés sur la portance et la traînée.

L'invention concerne également un avion comportant au moins un fuselage porteur conforme à l'une des revendications précédentes, et comportant au moins une surface portante assemblée au fuselage.

Un tel avion bénéficie ainsi d'un fuselage avec une portance et ou une traînée améliorée et ou contrôlée.

Dans une forme de réalisation le dispositif de modification de l'écoulement local comporte en outre au moins une surface défilante agencée sur une surface portante de sorte qu'il est également agit sur la circulation aérodynamique autour de la surface portante.

BREVE PRESENTATION DES DESSINS

Les exemples de réalisation de l'invention décrits de manière détaillée sont présentés en faisant référence aux dessins qui représentent de manière schématique à titre d'exemple, sans caractère limitatif :

- figures 1a, 1b et 1c ; une représentation simplifiée d'une cellule d'un avion suivant l'invention comportant un fuselage supercritique porteur, une aile et un empennage horizontal, en vue de dessus sur la figure 1a, en vue de profil sur la figure 1b et en vue de l'arrière sur la figure 1c ;
- figures 2a, 2b, 2c : une représentation schématique d'un exemple de corps porteur mis en oeuvre dans les exemples des modes de réalisations illustrés sur les figures 3 et 4, en vue de dessus sur la figure 2a, en vue de profil sur la figure 2b et en vue de l'arrière sur la figure 2c ;
- figure 3 : une représentation simplifiée suivant une coupe axiale verticale d'une partie avant du fuselage et d'un système de cylindres tournants de surface d'extrados et de surface d'intrados du fuselage ; le détail (a) illustrant agrandie la protubérance à l'extérieur du fuselage d'un des cylindres ; le détail (b) illustrant en vue perspective un cylindre segmenté suivant la direction de son axe avec deux segments montés sur un même axe :
- figure 4 : une représentation simplifiée suivant une coupe axiale verticale d'une partie avant du fuselage et d'un système de revêtement de surface défilant d'extrados et d'intrados du fuselage ;
- figure 5 : une illustration d'un fuselage en coupe suivant la forme de réalisation de la figure 3 montrant la direction des ondes de choc formées à l'extrados du fuselage dans le cas d'un vol haut subsonique ou supersonique.

DESCRIPTION DÉTAILLÉE DE MODES DE RÉALISATION

Sur les dessins des parties représentant des éléments ayant la même fonction, même de formes différentes, sont identifiées par la même référence.

Les éléments représentés sur les différentes figures et les différents éléments d'une même figure ne sont pas nécessairement représentés à l'échelle. En particulier des éléments de détails considérés comme utiles ou importants dans le cadre de l'invention sont au besoin fortement agrandis ou exagérés par rapport aux autres éléments dessinés pour la clarté des illustrations.

Pour les besoins de la description il est autant que de besoin fait référence à trois directions principales telles qu'elles sont utilisées de manière conventionnelle pour un repère avion :

- une direction X longitudinale, parallèle à un axe longitudinal de l'avion, orientée positivement vers l'avant de l'avion ;
- une direction Z verticale, perpendiculaire à la direction X et parallèle à un plan de symétrie vertical d'ensemble de l'avion, orientée positivement vers le bas ;
- une direction Y transversale, perpendiculaire à un plan XZ déterminé par les directions X et Z, orientée positivement vers la droite de l'avion.

Les termes ou expressions "haut", "bas", "intérieur", "extérieur", "droite", "gauche", "vers le haut", "vers le bas", "vers l'intérieur", "vers l'extérieur"... auront sauf précision contraire le sens que leur donnerait une personne dans l'avion en position de pilotage conventionnel. Dans le système d'axe défini, l'axe des Z positifs est donc orienté vers le bas et l'axe des Y positifs vers la droite de l'avion.

Les trois directions X, Y et Z associées à une origine quelconque forment un repère avion.

Par extension, lorsque qu'il s'adresse au cas d'un fuselage isolé, le système d'axe XYZ sera considéré comme le système local du fuselage considéré avec l'axe X suivant la direction de l'axe dudit fuselage.

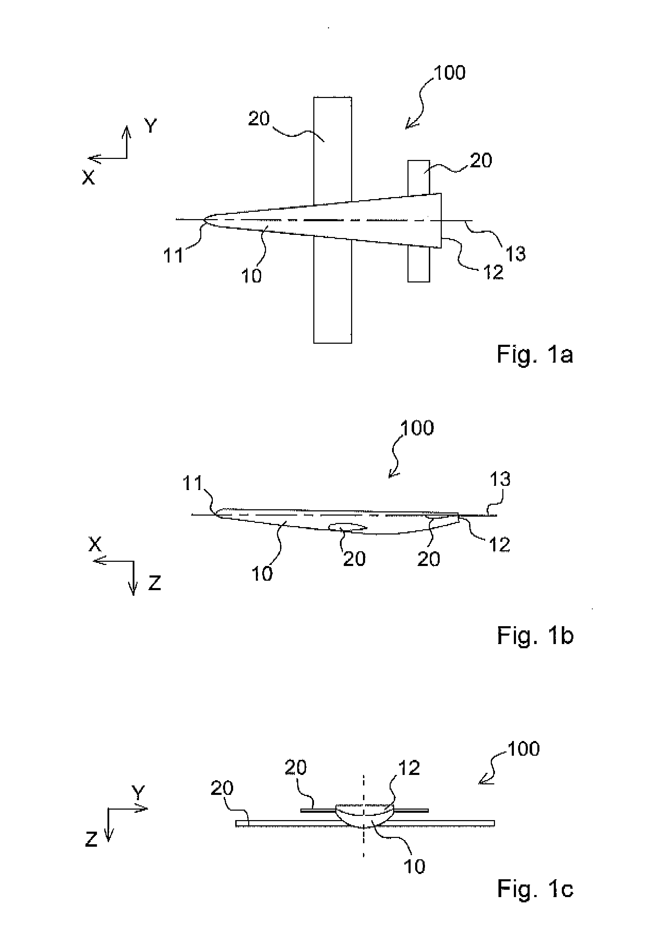

Les figures 1a, 1b et 1c présentent de manière schématique une architecture d'une cellule 100 d'un avion suivant l'invention suivant un mode de réalisation.

La cellule 100 est présentée en vue de dessus, figure 1a, en vue de profil, figure 1b, et en vue depuis l'arrière, figure 1 c.

Sur les figures 1a, 1b, 1c les différents éléments ne sont pas nécessairement représentés à une même échelle et peuvent en pratique présenter des formes et des proportions différentes de celles illustrées à titre d'exemple.

Sur les figures 1a, 1b, 1c, il n'est pas représenté de dispositif de propulsion, l'intégration de moteurs de propulsion avec la cellule de avion n'est pas l'objet de l'invention et relève des solutions applicables aux avions en général. L'intégration des moteurs ne sera pas abordée dans la présente description.

Sur les figures il n'est pas nécessairement représenté de volets, gouvernes ou autres surfaces mobiles. Ces surfaces mobiles, utiles ou nécessaires au contrôle de l'avion, connues de l'homme du métier, ne sont pas l'objet de la présente invention.

La cellule 100 des figures 1a, 1b, 1c comporte un fuselage 10 et des surfaces portantes 20, en particulier formant au moins une aile de l'avion.

Le fuselage 10, de formes adaptées pour assurer une portance propre dudit fuselage, est pourvu d'un dispositif 30 pour modifier localement les caractéristiques de l'écoulement et agir sur une portance L et sur une traînée D dudit fuselage dont la forme est elle même génératrice de portance.

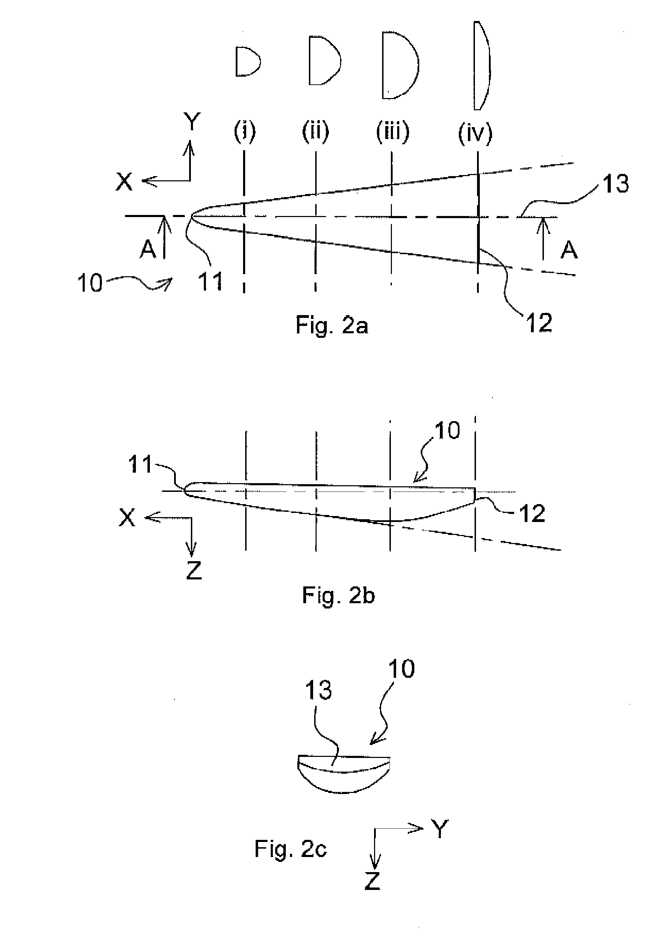

Dans une forme de réalisation, un fuselage 10 porteur présente, comme dans l'exemple illustré du fuselage isolé des autres éléments de la cellule 100 sur la figure 2a en vue de dessus, la figure 2b en vue de profil et la figure 2c en vue depuis l'arrière, une forme d'ensemble d'un demi-cône tronqué dont un sommet 11 est situé à l'avant du fuselage et dont l'extrémité tronquée 12 est située à l'arrière du fuselage.

On comprend qu'en pratique la forme d'ensemble en demi-cône du fuselage portant n'est qu'approximative, les contraintes aérodynamiques, les contraintes structurales et les contraintes d'aménagement pouvant nécessiter de s'éloigner d'une forme mathématique d'un cône.

Une section transversale du fuselage, c'est-à-dire une section perpendiculaire à un axe longitudinal 13 du cône, a priori dont la direction correspond dans la cellule 100 à celle de l'axe longitudinal X ou en est voisine, présente une forme en U fermé à sa partie supérieure. Les détails (i), (ii), (iii) et (iv) de la figure 2a représentent un exemple de sections transversales du fuselage et de leur évolution en fonction de la position suivant l'axe longitudinal de la section considérée.

Le fuselage 10 est donc de forme arrondie dans une partie inférieure dudit fuselage et de forme aplatie dans une partie supérieure dudit fuselage.

Il doit être noté que les proportions des sections, le rapport entre une hauteur et une largeur d'une section, ne sont pas constantes et évoluent en fonction de la position sur l'axe longitudinal. En pratique une hauteur minimale du corps est maintenue dans une zone de cabine pour prendre en compte les contraintes d'aménagement du fuselage alors que la largeur évolue de manière sensiblement continue.

Il ne sera pas abordé dans la présente description, de détail des structures pouvant réaliser le fuselage porteur, ledit fuselage pouvant être réalisé suivant des techniques, tant dans le choix des matériaux que dans celui des techniques d'assemblages, similaires à celles connues de l'homme du métier, en particulier celles mises en oeuvre dans le domaine aéronautique. Il en est de même pour les surfaces portantes et l'assemblage des dites surfaces portantes avec ledit fuselage.

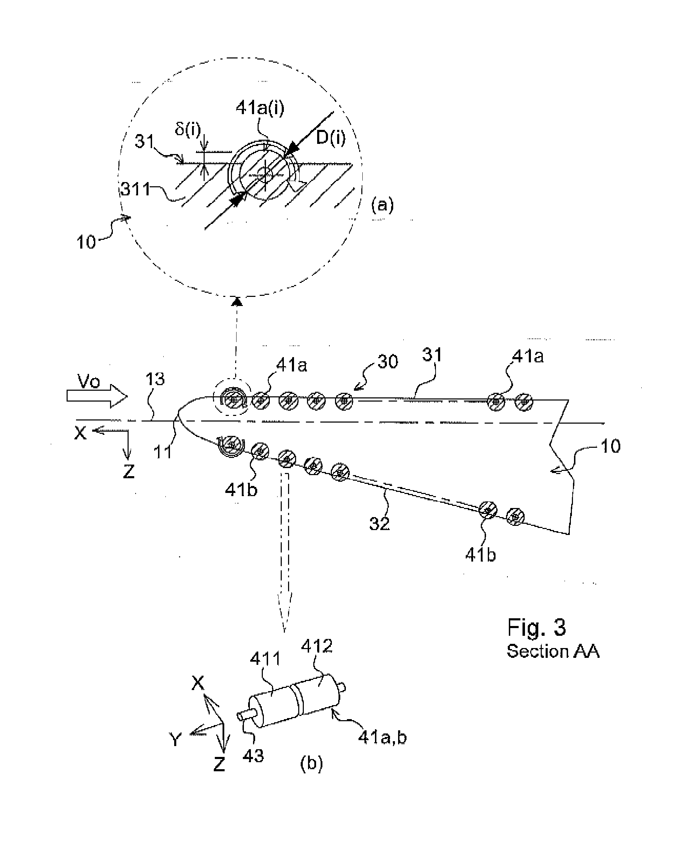

Le fuselage 10, comme illustré sur la figure 3 schématisant une section dudit fuselage suivant un plan axial vertical, comporte le dispositif 30 de modification de l'écoulement local autour du fuselage.

Dans l'exemple illustré sur la figure 3, le dispositif 30 comporte un ensemble de cylindres tournant d'extrados 41 a, situés du côté d'un extrados 31 du fuselage, et de cylindres tournants d'intrados 41 b, situés du côté d'un intrados 32 du fuselage.

Une partie de cylindre tournant en contact avec l'écoulement aérodynamique forme une surface défilante elle-même partie d'une surface de l'extrados ou de l'intrados suivant le cas.

Chaque cylindre tournant d'extrados ou d'intrados, de section circulaire, tourne, lorsqu'il est entraîné par un moteur de maintien en rotation, autour d'un axe de symétrie de révolution dudit cylindre perpendiculaire ou sensiblement perpendiculaire au plan de symétrie vertical du fuselage.

Un cylindre d'extrados 41 a(i), (i) représentant ici un indice d'un cylindre considéré compte tenu de conditions d'installation et de mise en oeuvre pouvant être différentes suivant le cylindre considéré, est agencé dans le fuselage 10 de sorte qu'une partie dudit cylindre d'extrados dépasse vers l'extérieur du fuselage du côté de l'extrados 31 d'une hauteur δ(i), comme illustré sur le détail (a) de la figure 3, une partie dépassante dudit cylindre d'extrados formant la surface défilante partie de la surface de l'extrados 31.

Le cylindre (i) dépasse, par rapport à une ligne naturelle de l'extrados, représentée en trait discontinus sur le détail (a) de la figure 3, par exemple d'une hauteur δ(i) comprise entre 5 % et 50 % d'un diamètre D(i) dudit cylindre.

Pour un même fuselage il peut être mis en oeuvre des cylindres de diamètres identiques ou de diamètres D(i) différents et agencé pour dépasser de hauteurs δ(i) identiques ou différentes.

L'extrados 31 comporte de préférence une pluralité de cylindres d'extrados 41 a de sorte que la combinaison d'une structure d'extrados fixe 311 du fuselage et de la dite pluralité de cylindres constitue une surface complexe d'extrados pouvant être mise dans un mouvement de défilement suivant une direction longitudinale dudit fuselage par une mise en rotation de chacun des cylindres d'extrados.

Un arbre 43, autour duquel un cylindre d'extrados est entraîné en rotation, est maintenu sur la structure fixe du fuselage, par exemple par des paliers, non représentés, de sorte à reprendre les efforts sur ledit cylindre d'extrados. A ce titre il doit être noté que pour des raisons de résistance et de stabilité structurale, un cylindre d'extrados 41 a peut comporter plusieurs segments de cylindre 411, 412, comme dans l'exemple illustré sur le détail (b) de la figure 3, agencés sur le même arbre 43 de sorte à être maintenu par un palier ou autre support de l'arbre non seulement aux extrémités mais également entre les segments, ce qui peut s'avérer avantageux pour des cylindres dont un rapport d'une longueur au diamètre ne permet pas de garantir une rigidité suffisante d'un cylindre en un seul segment maintenu par des paliers d'extrémité.

Un cylindre d'extrados 41 a peut être entraîné en rotation par tout moyen en mesure d'appliquer sur ledit cylindre d'extrados un couple continu et d'une intensité adaptée au couple résistant produit par ledit cylindre d'extrados lors de la mise en oeuvre du dispositif 30, pour maintenir une vitesse de rotation voulue.

Dans une forme de réalisation, chaque cylindre d'extrados est entraîné par au moins un moteur, par exemple un moteur électrique, recevant d'un superviseur du dispositif des consignes de vitesses de rotation dudit cylindre d'extrados.

Dans une autre forme de réalisation, dans laquelle des cylindres d'extrados sont maintenus entre eux dans un rapport de vitesses de rotation constant, deux ou plus cylindres d'extrados sont entraînés en rotation par un même moteur et sont couplés par des moyens mécaniques de transmission.

Dans une autre forme de réalisation, un cylindre d'extrados comporte une turbine interne, par exemple dans le corps cylindrique dudit cylindre, dans laquelle est amené un air comprimé du dispositif 30 de sorte à entraîner ledit cylindre en rotation.

Cette dernière forme est par exemple couplée avec un système de contrôle de laminarité de l'écoulement sur le fuselage 10 et ou sur les surfaces portantes 20 par aspiration de couche limite, tout ou partie de l'air comprimé du dispositif 30 correspondant à un air aspiré dans la couche limite.

L'agencement des cylindres d'intrados 41b par rapport à l'intrados 32 du fuselage 10 est similaire à celui des cylindres d'extrados 41 a par rapport à l'extrados 31 dudit fuselage.

L'homme du métier est donc en mesure de déduire l'agencement des cylindres d'intrados 41 b de la description de l'agencement des cylindres d'extrados 41 a, par transposition de l'extrados en intrados, sans qu'il soit nécessaire de la reprendre intégralement.

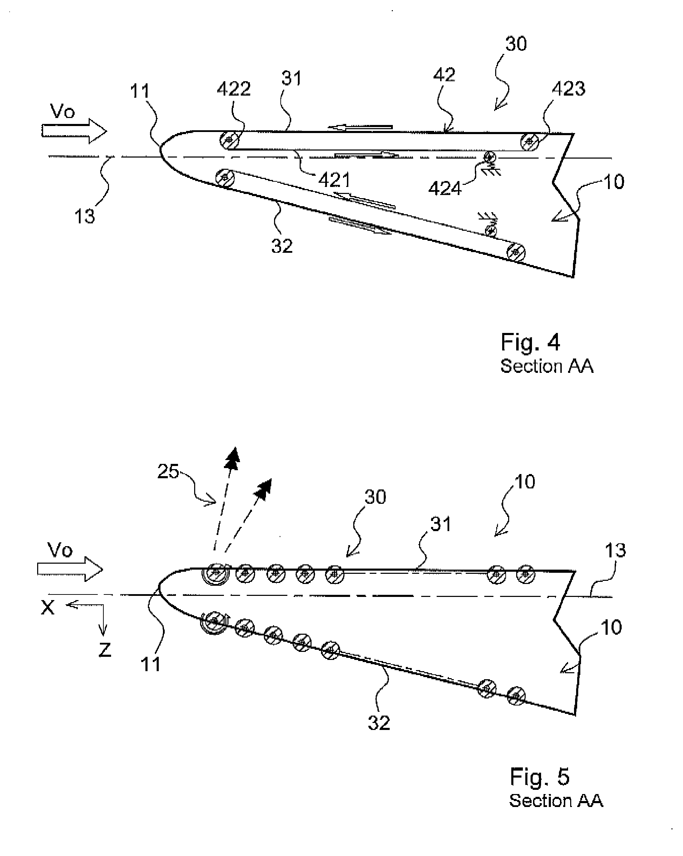

Dans une variante de réalisation, illustrée sur la figure 4 présentant en coupe axiale verticale une partie avant de fuselage 10 dans une configuration voisine de celle de la figure 3, un ou plusieurs cylindres, voire tous les cylindres, sont remplacés par un revêtement défilant 42 étendu dans la direction longitudinale du fuselage et constituant la surface défilante.

Le revêtement défilant 42 est constitué principalement d'un ruban souple 421 refermé sur lui-même par des extrémités dudit ruban, tendu entre au moins deux rouleaux guides 422, 423 pour former une boucle à défilement continu et avec une partie dudit ruban souple, formant localement une surface du fuselage en contact avec l'écoulement aérodynamique, à l'extrados 31 et ou à l'intrados 32.

Le revêtement défilant 42, par exemple entraîné par les rouleaux guides 422, 423 d'entraînement, eux-mêmes mis en rotation de manière similaire aux cylindres d'extrados 41 a ou d'intrados 41 b, assure les mêmes fonctions que les cylindres d'extrados et ou d'intrados de la forme de réalisation de la figure 3, avec le bénéfice d'un état de la surface d'intrados et d'extrados sans les excroissances des cylindres auxquels il se substitue dans leurs fonctions.

Comme dans le schéma de la figure 4, illustrant un exemple d'un tel revêtement défilant, les rouleaux d'entraînement sont avantageusement intégrés dans la structure du fuselage 10, évitant les parties protubérantes présent dans le cas des cylindres d'extrados et d'intrados.

Le ruban 421 est par exemple maintenu en tension par un contrôle d'une distance séparant les axes des rouleaux guides 422, 423.

Le ruban 421 peut également être maintenu en tension par au moins un rouleau tendeur 424 maintenant une traction sur le ruban 421 et le cas échéant qui réalise ou participe à l'entraînement dudit ruban pour assurer le défilement du revêtement et de la surface défilante.

Un tel revêtement défilant 42 peut être conçu pour couvrir tout ou partie de l'extrados 31 ou de l'intrados 32.

Dans une forme de réalisation, non illustrée, un même ruban réalise un revêtement défilant pour l'extrados et pour l'intrados.

Lorsque certaines parties des surfaces d'extrados et d'intrados ne sont pas couvertes par un revêtement défilant, des cylindres d'extrados 41 a et ou d'extrados 41 b peuvent être si besoin mis en oeuvre conjointement à des revêtements défilants.

Ainsi les deux modes décrits ci-dessus, soit par la mise en oeuvre de cylindres tournants 41 a, 41 b soit par la mise en oeuvre de revêtements défilant 421, peuvent être combinés sur un même fuselage en fonction des avantages que l'homme du métier déterminera pour chacun des deux modes compte tenu des contraintes propres au cas d'espèce en particulier vis à vis des contraintes aérodynamiques, des contraintes de structure ou encore des contraintes d'installation.

Les bénéfices attendus du fuselage de l'invention sont principalement d'ordre aérodynamique.

Lorsque les cylindres tournants 41 a, 41 b sont en rotation et ou les revêtements défilants 421 sont entraînés en défilement, il en résulte, lorsque le fuselage est en mouvement relatif par rapport à l'air ambiant, en pratique lorsque l'avion est en vol, une modification locale des interactions du fuselage avec l'écoulement aérodynamique, en particulier avec la couche limite de l'écoulement dont le comportement est modifié par les conditions au niveau de l'interface entre ledit écoulement et la paroi en contact avec ladite couche limite.

Suivant les théories connues des aérodynamiciens, en particulier le théorème de Kutta-Jukowski, la portance d'un corps en présence d'un écoulement peut être calculée en considérant la circulation qui est établie autour du corps.

Le calcul de la portance L par le théorème de Kutta-Jukowski utilise la formule :

$$L = \rho \, V \, \Gamma \quad (1)$$

formule dans laquelle **V** est la vitesse de l'écoulement et

ρ la masse volumique du fluide, dans le cas considéré l'air dans lequel se déplace l'avion, la circulation correspondant à l'intégrale curviligne de la vitesse **V** du fluide le long d'une courbe fermée autour du corps dont la portance est calculée : $\Gamma = \int V\ \mathbf{ds}$ **(2)**

Dans le cas de l'invention, la mise en oeuvre de surfaces défilantes, cylindres tournants et ou revêtements défilants, a pour effet de modifier la circulation autour du fuselage 10 lorsque celui-ci est placé dans un écoulement aérodynamique, caractérisé en particulier par sa vitesse infinie amont **Vo** dans le repère avion, typiquement l'écoulement de l'air lorsque l'avion comportant un tel fuselage est en vol.

Ces modifications ont en particulier pour origine les interactions entre la couche limite de l'écoulement et la paroi du fuselage et compte tenu de la condition aux limites qui impose en fluide réel une vitesse des molécules du fluide nulle par rapport à la surface soumise à l'écoulement.

1ᵉʳ MODE DE MISE EN OEUVRE : LES SURFACES DEFILANTES DEFILENT POUR INDUIRE UN DEPLACEMENT APPARENT DU REVETEMENT DU FUSELAGE DANS LA DIRECTION DE L'ECOULEMENT SUR LE REVETEMENT D'EXTRADOS DU FUSELAGE ET POUR INDUIRE UN DEPLACEMENT INVERSE A CELUI DE L'ECOULEMENT SUR LE REVETEMENT D'INTRADOS

Lorsque les surfaces défilantes d'extrados sont entraînées de sorte que la surface d'extrados 31 du fuselage, dans un repère fuselage, défile dans un même sens que l'écoulement aérodynamique Vo par rapport audit fuselage, il en résulte d'une part un entraînement de l'écoulement sur l'extrados 31, conduisant à une augmentation de la vitesse de l'écoulement sur l'extrados en raison des interactions dans la couche limite entre l'air et la surface du fuselage et d'autre part une vitesse relative de l'écoulement par rapport à la surface défilante diminuée.

Inversement, lorsque les surfaces défilantes d'intrados sont entraînées de sorte que la surface d'intrados 32 du fuselage, dans le repère fuselage, défile dans un sens inverse de l'écoulement amont **Vo,** il en résulte d'une part une diminution de la vitesse de l'écoulement d'intrados en raison des interactions dans la couche limite entre l'air et la surface du fuselage et d'autre part une vitesse relative de l'écoulement augmentée par rapport à la surface défilante.

Par « augmentation » et « diminution » de la vitesse de l'écoulement il doit être compris la vitesse de l'écoulement local par comparaison à la vitesse de l'écoulement infini amont **Vo** dans le repère du fuselage.

Dans cette configuration de la mise en oeuvre des surfaces défilantes, il résulte une augmentation de la circulation de l'écoulement aérodynamique sur le fuselage, augmentation des vitesses **V** dans l'équation (2), qui est en mesure de conférer audit fuselage une portance **L** augmentée par rapport à une portance naturelle dudit fuselage 10 porteur naturellement par ses caractéristiques géométriques.

2ᵉᵐᵉ MODE DE MISE EN OEUVRE : LES SURFACES DEFILANTES DEFILENT POUR INDUIRE UN DEPLACEMENT APPARENT DU REVETEMENT DU FUSELAGE DANS LA DIRECTION DE L'ECOULEMENT SUR LE REVETEMENT D'INTRADOS DU FUSELAGE ET POUR INDUIRE UN DEPLACEMENT INVERSE A CELUI DE L'ECOULEMENT SUR LE REVETEMENT D'EXTRADOS

Lorsque les surfaces défilantes d'extrados sont entraînées de sorte que la surface d'extrados 31 du fuselage, dans un repère fuselage, défile dans un sens inverse à celui de l'écoulement aérodynamique amont **Vo** par rapport audit fuselage, il en résulte d'une part une diminution de la vitesse de l'écoulement d'intrados en raison des interactions dans la couche limite entre l'air et la surface du fuselage et d'autre part une vitesse relative de l'écoulement augmentée par rapport à la surface défilante.

Inversement, lorsque les surfaces défilantes d'intrados sont entraînées de sorte que la surface d'intrados 32 du fuselage, dans le repère fuselage, défile dans le même sens que l'écoulement aérodynamique amont **Vo,** il en résulte d'une part une augmentation de la vitesse de l'écoulement d'intrados en raison des interactions dans la couche limite entre l'air et la surface du fuselage et d'autre part une vitesse relative de l'écoulement diminuée par rapport à la surface défilante.

Dans cette configuration de la mise en oeuvre des surfaces défilantes, il résulte une diminution de la circulation de l'écoulement aérodynamique sur le fuselage, diminution des vitesses **V** dans l'équation (2), qui confère audit fuselage une portance **L** diminuée par rapport à une portance naturelle dudit fuselage 10, portance pouvant devenir négative.

3ᵉᵐᵉ MODE DE MISE EN OEUVRE : LES SURFACES DEFILANTES DEFILENT POUR INDUIRE UN DEPLACEMENT APPARENT DU REVETEMENT DU FUSELAGE DANS LA DIRECTION DE L'ECOULEMENT SUR LE REVETEMENT D'EXTRADOS ET SUR LE REVETEMENT D'INTRADOS DU FUSELAGE

Lorsque les surfaces défilantes d'extrados et d'intrados sont entraînées de sorte que la surface du fuselage d'extrados 31 et d'intrados 32, dans un repère fuselage, défile dans un même sens que l'écoulement aérodynamique amont **Vo** par rapport audit fuselage, il en résulte d'une part un entraînement de l'écoulement sur l'extrados 31 et sur l'intrados 32 et une augmentation de la vitesse locale de l'écoulement en raison des interactions dans la couche limite entre l'air et la surface du fuselage et d'autre part une vitesse relative de l'écoulement diminuée par rapport à la surface défilante.

Dans cette configuration de la mise en oeuvre des surfaces défilantes, la circulation de l'écoulement aérodynamique sur le fuselage n'est pas affectée, ou seulement de manière limitée en raison de vitesses de défilement des surfaces défilante par rapport au fuselage, vitesses périphériques des cylindres ou vitesses de revêtements défilants, différentes et donc n'affecte pas, ou moins, la portance du fuselage que dans les premier et deuxième modes de mise en oeuvre.

Cependant, il résulte de cette configuration une diminution de la vitesse relative de l'écoulement par rapport au revêtement du fuselage, tant sur l'intrados que sur l'extrados, qui conduit à réduire le gradient de vitesse de l'écoulement dans la couche limite, gradient considéré suivant une normale à la surface du fuselage, et donc permet d'obtenir une réduction de la traînée de frottement sur le fuselage et une diminution de l'épaisseur de la couche limite.

4<sup>eme</sup> MODE DE MISE EN OEUVRE : LES SURFACES DEFILANTES DEFILENT POUR INDUIRE UN DEPLACEMENT APPARENT DU REVETEMENT DU FUSELAGE DANS LA DIRECTION INVERSE DE L'ECOULEMENT SUR LE REVETEMENT D'EXTRADOS ET SUR LE REVETEMENT D'INTRADOS DU FUSELAGE

Lorsque les surfaces défilantes d'extrados et d'intrados sont entraînées de sorte que les surfaces d'intrados 31 et d'extrados 32 du fuselage, dans un repère fuselage, se déplace dans un sens inverse à celui de l'écoulement aérodynamique amont Vo par rapport audit fuselage, il en résulte d'une part un ralentissement de l'écoulement aérodynamique sur l'extrados et sur l'intrados et une diminution des vitesses de l'écoulement d'extrados et d'intrados en raison des interactions dans la couche limite entre l'air et la surface du fuselage et d'autre part une vitesse relative de l'écoulement augmentée par rapport aux surfaces en défilement.

Dans cette configuration de la mise en oeuvre des surfaces défilantes, comme dans le mode précédent, la circulation de l'écoulement aérodynamique sur le fuselage n'est pas affectée, ou seulement de manière limitée en raison de vitesses de défilement des surfaces défilantes différentes, et donc n'affecte pas, ou moins, la portance du fuselage.

Cependant, il résulte de cette configuration une augmentation de la vitesse relative de l'écoulement par rapport au revêtement du fuselage, tant sur l'intrados que sur l'extrados, qui conduit à augmenter le gradient de vitesse de l'écoulement dans la couche limite, suivant une normale à la surface du fuselage, et dont il résulte une augmentation d'une épaisseur de la couche limite et de la traînée de frottement sur le fuselage.

Dans les différents modes de mise en oeuvre des surfaces défilantes, cylindres tournants 41 a, 41 b ou revêtements défilants 42, il est également obtenu un effet dans le cas d'un écoulement aérodynamique en amont Vo du fuselage avec une vitesse supersonique ou une vitesse en haut subsonique, en général supérieure à Mach 0,85, pour laquelle il est constaté sur un corps dans l'écoulement l'apparition de zones soniques ou supersoniques à la surface dudit corps et d'ondes de choc.

Dans ces conditions de vol, il est obtenu, par le choix d'un sens et d'une vitesse de défilement des surfaces défilantes, des modifications locales des vitesses relatives de l'écoulement avec les parois d'intrados et d'extrados du fuselage qui influencent le déclenchement d'ondes de choc et leurs stabilités.

Il est ainsi obtenu, comme illustré sur le schéma de la figure 5, de déclencher préférentiellement les ondes de choc sur l'extrados 31 du fuselage 10, se propageant vers le haut 25 par rapport au fuselage 10, par la mise en oeuvre des cylindres tournants ou revêtements défilants d'extrados considérées dans les deuxième et quatrième modes afin de limiter les impacts sonores des ondes de choc en direction du sol.

Il doit également être précisé que la mise en oeuvre des surfaces défilantes pour obtenir un défilement de la surface du fuselage dans la même direction que l'écoulement aérodynamique amont, ayant pour effet de diminuer la vitesse de l'écoulement par rapport à la paroi de la surface défilante, a pour conséquences de diminuer l'épaisseur de la couche limite et les gradients de vitesses de l'écoulement dans la couche limite, dont il résulte des décollements retardés et un écoulement moins turbulent.

Ce phénomène est d'autant plus avantageux sur l'extrados qui est soumis naturellement à des survitesses locales et qui, en dépression par rapport à la pression statique infinie amont, est sujet aux décollements des lignes de courant.

Les décollements, typiques d'extrados aux coefficients de portances élevés, seront donc retardés dans les premier et troisième modes de mise en oeuvre.

Comme il est déduit des différents modes de mise en oeuvre, le contrôle des sens de défilement des surfaces défilantes, sens de rotation des cylindres 41 a, 41 b ou sens de défilement des revêtements défilants 42, permet de contrôler principalement la portance L, en intensité pour une incidence donnée et en valeur maximale par le retard des décollements, et dans une certaine mesure de contrôler la traînée aérodynamique D du fuselage.

Dans une forme de réalisation, des surfaces défilantes ne sont installées sur le fuselage 10 que pour l'une des surfaces d'intrados ou d'extrados et en pratique sur seulement certaines parties des dites surfaces compatibles avec des contraintes d'installation, par exemple en raison d'une exigence de hauteur du fuselage pour installer le dispositif 30 de modification de l'écoulement local.

En outre lorsqu'il est dans la description fait état d'une direction de défilement des surfaces défilantes suivant la direction de l'axe longitudinal 13 du fuselage 10, il doit être compris la direction de défilement des surfaces défilantes doit, pour apporter les effets recherché, cor-

responde au mieux à la direction locale des lignes de courant aérodynamique à l'emplacement d'une surface défilante considérée, et avantageusement pour qu'une composante de la vitesse de l'écoulement, représentant au moins 50 % du module en valeur absolue de la vitesse de l'écoulement, corresponde à une composante de la vitesse de l'écoulement suivant la direction du défilement.

Avantageusement les surfaces défilantes sont agencées sur le fuselage en fonction de contraintes d'installation mécanique pour qu'un angle entre la direction d'un écoulement local déterminée pour des conditions moyennes de croisière et la direction du défilement d'une surface défilante reste compris en vol entre ± 45° (modulo 180°).

Appliqués dans des configurations de vol et ou dans des modes de pilotage, le contrôle de la portance permet d'augmenter la portance à assiette sensiblement constante du fuselage, ou avec des variations d'assiette limitées, dans des phases de décollage ou de croisière. Il est ainsi tiré un meilleur parti de la poussée des moteurs qui reste orientée suivant la direction du vol, et le confort des passagers est amélioré.

Dans ces phases il est également profitable de diminuer la traînée du fuselage.

Le contrôle de la portance permet également de diminuer la portance lors des phases d'atterrissage et de roulage à l'atterrissage, également à assiette constante ou avec des variations d'assiette limitées. Il est ainsi possible réaliser le contrôle de portance lors des phases de vol en approche pour tenir précisément une trajectoire voulue et ou de générer une déportance et une traînée augmentée au roulage à l'atterrissage pour réduire l'usage des freins de roues.

L'amélioration du coefficient de portance maximale du fuselage 10 porteur permet également de réaliser des vols à des altitudes augmentées, malgré la diminution de la pression statique de l'air avec l'augmentation de l'altitude, permettant une diminution d'une quantité de carburant nécessaire pour réaliser un vol.

Un fuselage 10 porteur suivant l'invention et un avion comportant un tel fuselage porteur présente ainsi des performances améliorées et des capacités de contrôle améliorées.

La conception d'un fuselage d'avion suivant l'invention prend en compte le besoin de disposer des volumes nécessaires à la mise en place de surfaces défilantes par exemple par la mise en oeuvre de cylindres tournants et ou de surfaces défilantes et de leurs dispositifs d'entraînement qui ne nécessitent pour les mouvements de rotation et de défilement qu'une énergie faible, très inférieure en niveau à un niveau d'énergie mise en oeuvre pour la propulsion de l'avion.

Les principes de l'invention sont également applicables à d'autres parties d'un avion que le fuselage. Ainsi il est possible sur un avion de disposer des cylindres et ou des surfaces défilantes sur l'extrados et ou l'intrados d'autres surfaces portantes, ailes ou empennages, au moins dans des emplacements localisés des dites surfaces portantes, par exemple des emplacements présentant des risques de décollements ou des emplacements ayant une importance particulière en termes d'effets sur la portance ou la traînée globale de la surface portante considérée.

Un avion peut également comporter une pluralité de fuselages tel que le fuselage 10 de l'invention, par exemple deux fuselages porteurs juxtaposés maintenus entre eux par des surfaces portantes.

## Revendications

1. Fuselage (10) d'avion, générateur de portance aérodynamique lorsque qu'il est soumis à un écoulement aérodynamique, **caractérisé en ce que** ledit fuselage comporte un dispositif de modification de l'écoulement local (30) sur un extrados (31) et ou sur un intrados (32) dudit fuselage par un défilement d'au moins une surface défilante lorsque ledit fuselage est soumis à l'écoulement aérodynamique, couvrant tout ou partie d'une surface dudit extrados et ou dudit intrados.

2. Fuselage suivant la revendication 1 dans lequel ladite au moins une surface défilante est agencée sur ledit fuselage avec une direction de défilement de la surface défilante fixe dans un repère fuselage et orientée dans ledit repère fuselage pour être soumise, à une composante de la vitesse de l'écoulement aérodynamique égale ou supérieure à 50 % du module en valeur absolue de la vitesse de l'écoulement aérodynamique à l'emplacement de ladite surface défilante.

3. Fuselage suivant la revendication 2 dans lequel l'au moins une surface défilante est agencée sur le fuselage pour qu'un angle entre la direction d'un écoulement local, déterminée pour des conditions moyennes de vol en croisière, et la direction du défilement de la dite surface défilante soit compris entre ± 45°, modulo 180°.

4. Fuselage suivant l'une des revendications précédentes dans lequel au moins une surface défilante comporte un cylindre tournant d'extrados (41 a) agencé dans une structure du fuselage (10) et dans lequel ledit cylindre tournant d'extrados dépasse à l'extérieur dudit fuselage par rapport à une ligne naturelle de l'extrados (31) d'une hauteur δ comprise entre 5 % et 50 % d'un diamètre D dudit cylindre tournant d'extrados.

5. Fuselage suivant l'une des revendications précédentes dans lequel au moins une surface défilante comporte un cylindre tournant d'intrados (41 b) agencé dans une structure du fuselage (10) et dans lequel ledit cylindre tournant d'intrados dépasse à l'extérieur dudit fuselage par rapport à une ligne naturelle de l'intrados (32) d'une hauteur $\delta$ comprise entre 5 % et 50 % d'un diamètre D dudit cylindre tournant d'intrados.

6. Fuselage suivant l'une des revendications 4 ou 5 dans lequel un cylindre tournant (41 a, 41 b) est entraîné en rotation à vitesse contrôlée autour d'un axe de révolution du cylindre tournant considéré par un moteur du dispositif 30 de modification de l'écoulement local.

7. Fuselage suivant l'une des revendications précédentes dans lequel au moins une surface défilante comporte un revêtement défilant (42) constituant tout ou partie d'une surface de l'extrados (31) et ou de l'intrados (32) du fuselage, soumise à l'écoulement aérodynamique.

8. Fuselage suivant la revendication 7 dans lequel le revêtement défilant (42) est un ruban (421) refermé sur lui-même pour constituer une boucle et maintenu en tension entre au moins deux rouleaux guides (422, 423).

9. Fuselage suivant l'une des revendications précédentes dans lequel ledit fuselage (10) est un corps porteur ayant une forme d'ensemble de demi-cône tronqué dont des sections perpendiculaires à un axe longitudinal (13) dudit fuselage présentent une forme arrondie dans une partie inférieure formant un intrados (32) dudit fuselage et aplatie dans une partie supérieure formant un extrados (31) dudit fuselage, une partie effilée dudit demi-cône étant située du côté d'une extrémité avant (11) de l'avion et une partie tronquée étant située du côté d'une extrémité arrière (12) de l'avion.

10. Avion comportant au moins un fuselage (10) porteur conforme à l'une des revendications précédentes, et comportant au moins une surface portante (20) assemblée audit fuselage.

11. Avion suivant la revendication 10 dans lequel le dispositif (30) de modification de l'écoulement local comporte en outre au moins une surface défilante agencée sur une surface portante.

Fig. 1a

Fig. 1b

Fig. 1c

(i)   (ii)   (iii)   (iv)

Y

X

13

A

10

11

A

12

**Fig. 2a**

10

11

X

Z

12

**Fig. 2b**

10

13

**Fig. 2c**

Y

Z

**Fig. 3**
Section AA

Fig. 4
Section AA

Fig. 5
Section AA

Europäisches
Patentamt

European
Patent Office

Office européen
des brevets

**RAPPORT DE RECHERCHE EUROPEENNE**

Numéro de la demande

EP 15 30 6117

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 104 015 924 A (UNIV NANCHANG HANGKONG) 3 septembre 2014 (2014-09-03) * le document en entier * ----- | 1,7,8 | INV. B64C1/00 B64C23/08 |
| X | US 2002/047072 A1 (GARVER THEODORE [US]) 25 avril 2002 (2002-04-25) * alinéas [0004], [0028], [0029], [0037]; figures * ----- | 1,4-8, 10,11 | |
| Y | WO 97/43176 A1 (REDWOOD AIRCRAFT CORP [US]) 20 novembre 1997 (1997-11-20) * page 2, lignes 17-25 * * page 5, dernier alinéa - page 6, alinéa 1 * * page 7, ligne 22 - page 8, ligne 9; figures * ----- | 1-3,7,8 | |
| Y | FR 2 695 097 A1 (BONNOTTE MICHEL [FR]) 4 mars 1994 (1994-03-04) * page 1, lignes 1-4 * * page 2, lignes 27-32 * * page 3, lignes 7-25 * * page 4, lignes 7-21; figures * ----- | 1-3,7-9 | DOMAINES TECHNIQUES RECHERCHES (IPC) B64C |
| Y | WO 2007/002243 A2 (STEPHENSON JON [US]) 4 janvier 2007 (2007-01-04) * figures * ----- | 9 | |
| A | US 2002/179777 A1 (AL-GARNI AHMED Z [SA] ET AL) 5 décembre 2002 (2002-12-05) * abrégé; figures * ----- | 1-11 | |
| A | GB 439 963 A (ROBERT JOSEPH MCLAUGHLIN) 18 décembre 1935 (1935-12-18) * figures * ----- | 1 | |
| A | FR 1 053 332 A (CASIMIR VILLEDARY) 2 février 1954 (1954-02-02) * le document en entier * ----- | 1 | |

Le présent rapport a été établi pour toutes les revendications

| Lieu de la recherche | Date d'achèvement de la recherche | Examinateur |
|---|---|---|
| Munich | 11 décembre 2015 | Salentiny, Gérard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 3 115 293 A1**

## ANNEXE AU RAPPORT DE RECHERCHE EUROPEENNE
## RELATIF A LA DEMANDE DE BREVET EUROPEEN NO.

EP 15 30 6117

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-12-2015

| Document brevet cité au rapport de recherche | | Date de publication | Membre(s) de la famille de brevet(s) | | Date de publication |
|---|---|---|---|---|---|
| CN 104015924 | A | 03-09-2014 | AUCUN | | |
| US 2002047072 | A1 | 25-04-2002 | AUCUN | | |
| WO 9743176 | A1 | 20-11-1997 | CA | 2254880 A1 | 20-11-1997 |
| | | | US | 5769358 A | 23-06-1998 |
| | | | WO | 9743176 A1 | 20-11-1997 |
| FR 2695097 | A1 | 04-03-1994 | AUCUN | | |
| WO 2007002243 | A2 | 04-01-2007 | US | 2007018036 A1 | 25-01-2007 |
| | | | WO | 2007002243 A2 | 04-01-2007 |
| US 2002179777 | A1 | 05-12-2002 | AUCUN | | |
| GB 439963 | A | 18-12-1935 | AUCUN | | |
| FR 1053332 | A | 02-02-1954 | AUCUN | | |

EPO FORM P0460

Pour tout renseignement concernant cette annexe : voir Journal Officiel de l'Office européen des brevets, No.12/82

**EP 3 115 293 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2909358
- WO 9743176 A